(19) Europäisches Patentamt
European Patent Office
Office européen des brevets

(11) **EP 4 759 573 A1**

(12) **DEMANDE DE BREVET EUROPEEN**

(43) Date de publication:
**17.06.2026 Bulletin 2026/25**

(21) Numéro de dépôt: **25211530.8**

(22) Date de dépôt: **28.10.2025**

(51) Classification Internationale des Brevets (IPC):
***B60G 15/06*** ^(2006.01)

(52) Classification Coopérative des Brevets (CPC):
**B60G 15/068;** B60G 2202/312; B60G 2204/1242;
B60G 2204/418

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **12.12.2024 FR 2414032**

(71) Demandeur: **NTN Europe
74000 Annecy (FR)**

(72) Inventeurs:
• **BAUDU, Alexandre
74010 ANNECY (FR)**
• **POUROY-SOLARI, Vincent
74230 Thônes (FR)**

(74) Mandataire: **Alatis
3, rue Paul Escudier
75009 Paris (FR)**

(54) **SUPPORT INFÉRIEUR POUR UNE BUTÉE TOURNANTE DE SUSPENSION ET JAMBE DE SUSPENSION ASSOCIÉE**

(57) Un support inférieur annulaire pour une butée tournante de suspension 12 d'une jambe de suspension 10 formant une portée d'appui 32 annulaire, et une jupe annulaire 34 comprenant un bord inférieur 36 présentant un crénelage axial formant une alternance annulaire de dents 38 en saillie axiale et de vides 40 séparant les dents 38 deux à deux.

[Fig. 1]

Fig.1

EP 4 759 573 A1

**Description**

**DOMAINE TECHNIQUE DE L'INVENTION**

L'invention concerne, de façon générale, le domaine technique des suspensions automobiles. Elle se rapporte plus spécifiquement à un support d'une butée de suspension pour une jambe de suspension destinée à être montée à une superstructure d'un véhicule, notamment un châssis ou une caisse d'un véhicule automobile.

**ÉTAT DE LA TECHNIQUE ANTÉRIEURE**

Les jambes de suspension des véhicules comprennent généralement des butées de suspension qui constituent l'interface entre d'une part un ressort hélicoïdal et éventuellement un amortisseur télescopique de la de la jambe de suspension, et d'autre part une superstructure du véhicule, pour transmettre, le cas échéant en les filtrant et/ou les amortissant, les efforts axiaux du ressort et de l'amortisseur télescopique, tout en assurant un degré de liberté de rotation autour de l'axe du ressort.

Par exemple, le document FR2975947 B1 décrit une butée de suspension comportant un couvercle de butée lié à la superstructure du véhicule, un support inférieur sur lequel vient en appui le ressort hélicoïdal de la jambe de suspension, et un palier à roulement logé entre le support inférieur et le couvercle de butée. Le support inférieur de la butée de suspension est réalisé en matériau plastique, le cas échéant surmoulé sur un insert métallique, qui présente l'avantage d'être léger et peu coûteux à la fabrication, ceci même pour des pièces de géométrie complexe.

Le support de butée en plastique sans insert n'est pas adapté à tous les véhicules car il ne permet pas de reprendre des efforts trop importants. De plus, il pose des problèmes de recyclage. L'insert métallique pose quant à lui des problèmes de corrosion à l'usage, et impose des traitements anti-corrosion coûteux.

Il a été proposé de développer des supports inférieurs de butées de suspension monoblocs réalisés intégralement en alliage léger d'aluminium ou de zinc, par moulage, comme divulgué dans la demande française FR3099415 A1. La pièce résultante est rigide, parfaitement recyclable, et ne nécessite pas de traitement anti-corrosion, mais elle est massive et relativement lourde, nécessitant un volume important de matière, d'autant plus que les formes doivent rester simples pour éviter les reprises d'usinage en sortie de moule.

**EXPOSÉ DE L'INVENTION**

L'invention vise à remédier aux inconvénients de l'état de la technique et à proposer un support inférieur d'une jambe de suspension plus léger et moins couteux, tout en préservant sa robustesse.

Pour ce faire, l'invention a trait à un support inférieur annulaire pour une butée tournante de suspension d'une jambe de suspension, le support inférieur présentant un volume de matière et formant une portée d'appui annulaire centrée sur un axe de référence et tournée axialement dans une direction axiale descendante pour venir en appui direct ou indirect, dans un plan d'appui perpendiculaire à l'axe de référence, contre une spire supérieure d'un ressort hélicoïdal de la jambe de suspension, et une jupe annulaire en saillie axiale depuis la portée d'appui annulaire dans la direction axiale descendante, la jupe annulaire comprenant un bord inférieur présentant un crénelage axial formant une alternance annulaire de dents en saillie axiale et de vides séparant les dents deux à deux, le bord inférieur ayant au moins un point d'intersection avec un plan supérieur perpendiculaire à l'axe de référence et au moins un point d'intersection avec un plan inférieur perpendiculaire à l'axe de référence, tels que le bord inférieur est entièrement situé entre le plan inférieur et le plan supérieur, le support inférieur étant remarquable en ce qu'une portion inférieure du support inférieur, située entre le plan supérieur et le plan inférieur, est située entièrement à l'intérieur d'une enveloppe ayant une symétrie de révolution autour de l'axe de référence, et le volume de matière du support inférieur est inférieur à 96%, de préférence 92%, d'un volume obtenu en additionnant le volume d'une portion supérieure du support inférieur située au-dessus du plan supérieur, et le volume de l'enveloppe.

Le crénelage du bord inférieur permet, par l'intermédiaire des dents, de prolonger axialement la jupe annulaire, de sorte à assurer le centrage du ressort hélicoïdal autour de l'axe de référence, tandis que les vides réduisent le volume de matière formant le support inférieur, de sorte à alléger ledit support inférieur. Le support inférieur, conformément à l'invention, présente un volume de matière réduit et est donc plus léger et de fait moins coûteux.

Selon un mode de réalisation, le plan inférieur est situé à une distance D1 du plan supérieur et à une distance D2 du plan d'appui, telles que $D1/D2 > 0,3$, et de préférence $D1/D2 > 0,5$.

Le crénelage présente alors une dimension axiale non négligeable. En effet, le crénelage forme ainsi des vides sur une hauteur d'au moins 30% de la plus grande hauteur de la jupe annulaire. Le volume vide, sans matière, est donc conséquent selon la dimension axiale, contribuant à la diminution du volume de matière du support inférieur.

De préférence, dans un plan de coupe perpendiculaire à l'axe de référence et situé à mi-distance du plan inférieur et du plan supérieur, deux dents successives sont séparées par un vide de secteur angulaire supérieur ou égal à 15°, de préférence supérieur ou égal à 25°, mesuré autour de l'axe de référence . De préférence encore, deux vides successifs sont séparés par une dent d'un secteur angulaire strictement inférieur au secteur angulaire du vide, autour de l'axe de référence.

La présence de vide est donc conséquente également selon la dimension circonférentielle. Le volume vide sans matière est donc important en direction circonférentielle, contribuant à la diminution du volume de matière du support inférieur.

Selon un mode de réalisation, la distance D1 est supérieure ou égale à 200% d'une distance D3 séparant deux faces radiales opposées de la jupe annulaire, de préférence supérieure ou égale à 300% de la distance D3. De ce fait, les dents présentent une épaisseur suffisante pour résister aux torsions éventuelles du ressort hélicoïdal, assurant ainsi le centrage ou un pré-centrage dudit ressort autour de l'axe de référence.

Selon un mode de réalisation, le support comprend un nombre N1 de dents supérieur ou égal à 3, de préférence équirépartie autour de l'axe de référence, de préférence supérieur ou égal à 5, et inférieur ou égal à 15, de préférence inférieur ou égal à 12. Ainsi le nombre de dents est suffisant pour un bon centrage du ressort.

Selon un mode de réalisation, certaines au moins des dents présentent une interface de liaison avec une manche de protection d'un amortisseur télescopique de la jambe de suspension ou avec un anneau de filtration annulaire destiné à être interposé entre la portée d'appui et la spire supérieure du ressort hélicoïdal de la jambe de suspension, par exemple :

- un ou plusieurs crochets annulaires en saillie radialement à l'opposé de l'axe de référence ; et/ou

- un ou plusieurs crochets annulaires en saillie radialement vers l'axe de référence ; et/ou

- un ou plusieurs crochets en saillie orthoradiale vers une dent voisine parmi les dents.

Selon un mode de réalisation, le support inférieur est constitué d'un métal ou alliage métallique monobloc, de préférence un métal léger ou un alliage de métaux légers, de préférence encore constitué d'un alliage d'aluminium ou de zinc, permettant au support inférieur de reprendre des efforts supérieurs à ceux qu'il aurait pu reprendre si ce dernier était fabriqué en matériau plastique. De plus, l'invention est d'autant plus avantageuse si le support inférieur est constitué d'un métal ou un alliage de métaux, plus dense qu'un matériau plastique, l'invention permettant de diminuer de manière conséquente le poids du support inférieur.

Pour permettre sa fabrication par moulage dans un moule axial simple, de préférence sans tiroirs, on prévoit de préférence qu'un pourtour intérieur du support inférieur, incluant le bord inférieur, est réalisé sans contredépouille en direction axiale. Le crénelage est ainsi réalisé par un noyau de moule. De préférence, un pourtour extérieur du support inférieur, complémentaire du pourtour intérieur, est réalisé sans contredépouille en direction axiale ou dans une direction radiale de démoulage. On peut alors former le pourtour extérieur soit avec des cavités de moule mobile axialement dans la direction de référence, soit avec des cavité de moule mobiles dans la direction de démoulage.

Selon un autre aspect de l'invention, une butée tournante de suspension d'une jambe de suspension, la butée tournante de suspension étant remarquable en ce qu'elle comprend au moins :

- un support inférieur tel que décrit plus haut,

- un couvercle de butée permettant de lier la butée tournante de suspension à une superstructure de véhicule,

- un palier lisse ou à roulement positionné entre le support inférieur et le couvercle de butée, guidant un mouvement relatif de rotation entre le couvercle de butée et le support inférieur autour de l'axe de référence du support inférieur,

- de façon optionnelle, un anneau de filtration élastomère en appui direct ou indirect contre la portée d'appui et configuré pour filtrer des bruits ou vibrations entre un ressort hélicoïdal et le support inférieur,

- de façon optionnelle, une manche de protection déformable continument annulaire s'étendant axialement dans une direction descendante depuis la jupe annulaire, la manche de protection étant configurée pour protéger un volume central que la manche de protection délimite, le volume central étant destiné à accueillir une partie au moins d'un amortisseur télescopique.

Le support inférieur procure ainsi ses avantages, à savoir sa réduction de poids et de coûts de fabrication, à la butée tournante de suspension.

Selon un mode de réalisation, l'anneau de filtration est surmoulé sur une partie au moins de la portée d'appui annulaire et une partie au moins de la jupe annulaire du support inférieur, permettant d'étanchéifier la butée tournante de suspension au niveau de la liaison entre le support inférieur et l'anneau de filtration. De plus, le surmoulage de l'anneau de filtration sur le support inférieur permet une meilleure résistance mécanique des deux pièces aux contraintes exercées par exemple par le ressort hélicoïdal. Par ailleurs, le surmoulage permet une adhésion de la filtration au support inférieur, et donc d'empêcher la filtration de migrer au fil du temps et des mouvements de pompage de la suspension. Le surmoulage limite également les opérations de montage de la filtration sur le support inférieur.

Selon un mode de réalisation, l'anneau de filtration recouvre une partie au moins de chaque dent de la jupe annulaire, de préférence recouvre intégralement une face annulaire extérieure de la jupe annulaire, la face annulaire extérieure étant tournée à l'opposé de l'axe de référence. L'anneau de filtration permet alors une protection des dents de la jupe annulaire face aux contraintes extérieures. De préférence, l'anneau de filtration recouvre intégralement la jupe annulaire du support inférieur. L'anneau de filtration permet alors une protection de toute la jupe annulaire face aux contraintes extérieures.

Selon un mode de réalisation, l'anneau de filtration obstrue radialement les vides de la jupe annulaire. L'anneau forme ainsi une liaison étanche avec le support inférieur. L'anneau de filtration étant généralement conçu en matériaux plastiques, l'obstruction des vides n'aura que peu ou pas d'impact sur le poids de la butée tournante de suspension.

Selon un mode de réalisation, l'anneau de filtration présente une interface de liaison, par exemple un crochet annulaire continu ou discontinu, l'interface de liaison étant configurée pour lier directement ou indirectement la manche de protection au support inférieur. Ce mode de réalisation est avantageux si la jupe annulaire ne présente pas d'interface de liaison. Les crochets sont ainsi formés dans le même matériau que l'anneau de filtration. La réalisation de l'interface de liaison sur la manche de protection est plus simple que sur le support inférieure, les contredépouilles étant plus faciles à gérer dans le moule d'injection de la manche de protection (la manche étant de préférence en matière élastomère) que dans le moule du support inférieur métallique.

Selon un mode de réalisation, la manche de protection présente, à une extrémité supérieure de la manche de protection, une extension de liaison s'étendant axialement dans une direction axiale ascendante opposée à la direction axiale descendante, de préférence l'extension de liaison présente une interface de liaison complémentaire destinée à se lier par complémentarité de forme à l'interface de liaison formée par le support inférieur ou l'anneau de filtration.

Selon un mode de réalisation, l'extension de liaison recouvre tout ou partie d'une face annulaire extérieure de la jupe annulaire , de préférence, l'extension de liaison recouvre tout ou partie de la portée d'appui annulaire, de préférence encore l'extension de liaison est intercalée entre une partie au moins du support inférieur et une partie au moins de l'anneau de filtration, de préférence est pincée entre une partie au moins du support inférieur et une partie au moins de l'extension de liaison. La manche de protection est alors partiellement pincée entre le support inférieur et l'anneau de filtration, améliorant le maintien de la manche, l'étanchéité et la résistance mécanique face aux contraintes générées par le ressort, et diminuant la complexité de forme et de montage puisque cette liaison ne nécessite pas de crochet (ceux-ci pouvant tout de même être complémentaires à ce mode de réalisation).

Selon un autre aspect de l'invention, une jambe de suspension comprend au moins une butée tournante de suspension telle que décrite ci-dessus, un ressort hélicoïdal dont une spire supérieure est en appui direct ou indirect, dans un plan d'appui perpendiculaire à l'axe de référence du support inférieur, avec la portée d'appui annulaire, et, le cas échéant, un amortisseur télescopique logé dans le volume central de la manche de protection. Une telle jambe de suspension bénéficie donc de l'ensemble des avantages suscités.

## BRÈVE DESCRIPTION DES FIGURES

D'autres caractéristiques et avantages de l'invention ressortiront à la lecture de la description qui suit, en référence aux figures annexées.

[Fig. 1] La figure 1 illustre, dans une vue en coupe axiale, une butée tournante de suspension comprenant un support inférieur selon un premier mode de réalisation.

[Fig. 2] La figure 2 illustre, dans une vue isométrique, le support inférieur selon le premier mode de réalisation.

[Fig. 3] La figure 3 illustre, dans un plan de coupe, le support inférieur vu de dessous selon le premier mode de réalisation.

[Fig. 4] La figure 4 illustre, la butée tournante de suspension comprenant le support inférieur selon un deuxième mode de réalisation.

[Fig. 5] La figure 5 illustre, dans une vue en perspective, le support inférieur, un anneau de filtration et une manche de protection de la butée tournante de suspension selon le deuxième mode de réalisation.

[Fig. 6] La figure 6 illustre, dans une vue en coupe, la butée tournante de suspension comprenant le support inférieur selon un troisième mode de réalisation.

[Fig. 7] La figure 7 illustre, dans une vue en perspective, le support inférieur, l'anneau de filtration et la manche de protection de la butée tournante de suspension selon le troisième mode de réalisation.

## DESCRIPTION DÉTAILLÉE DE MODES DE REALISATION

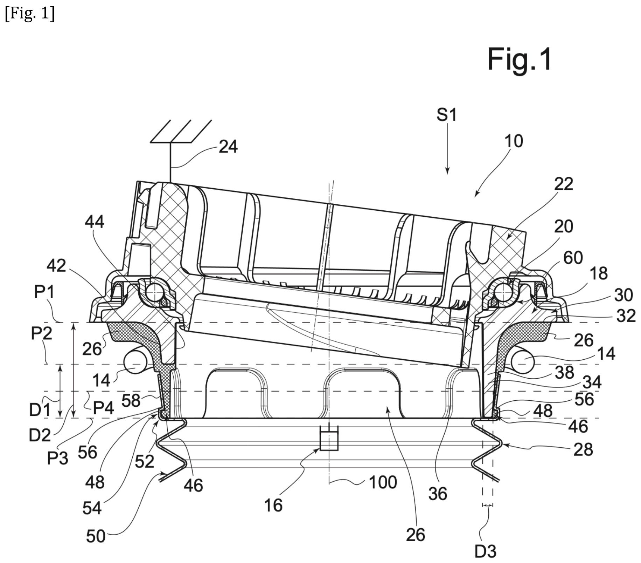

Sur la figure 1 est illustrée une butée tournante de suspension **12** d'une jambe de suspension **10** pour un véhicule selon un premier mode de réalisation. La jambe de suspension **10** comprend un ressort hélicoïdal **14,** un amortisseur télescopique **16** et la butée tournante de suspension **12.**

La butée tournante de suspension **12** comprend un support inférieur **18,** un palier de roulement **20** supporté par un siège **60** du support inférieur **18,** et un couvercle de butée **22,** destiné à être fixé à une superstructure **24** du véhicule, et formant avec le support inférieur **18** un volume de logement pour le palier de roulement **20.** Le palier de roulement **20** permet un mouvement relatif de rotation entre le support inférieur **18** et le couvercle de butée **22.**

Optionnellement, la butée tournante de suspension **12** comprend un anneau de filtration **26** permettant une diminution de bruits et de vibrations transmis entre une roue du véhicule et la superstructure **24** du même véhicule par l'intermédiaire du ressort hélicoïdal **14.** La butée tournante de suspension **12** peut également comprendre une manche de protection **28** permettant de protéger l'amortisseur télescopique **16** contre des impuretés de l'environnement extérieur, la manche de protection **28** étant imperméable.

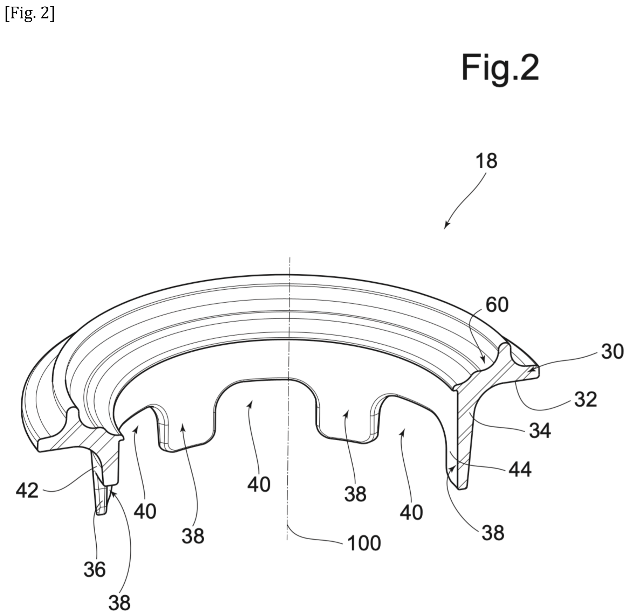

Le support inférieur **18,** illustré seul sur la figure 2 conformément à l'invention, est monobloc. Le support inférieur **18** est formé par un volume de matière. Le support inférieur **18** est annulaire, centré sur un axe de référence **100.** Le support inférieur **18** est composé d'un matériau résistant permettant de reprendre des efforts importants. Pour ce faire, le support inférieur **18** est constitué en un matériau métallique léger, de préférence d'aluminium. Optionnellement, le support inférieur **18** peut comprendre ou être constitué par un autre métal léger, par exemple du zinc.

Le support inférieur **18** présente une collerette annulaire **30.** La collerette annulaire **30** forme une portée d'appui **32** annulaire dans une direction axiale descendante **S1** pour une spire supérieure du ressort hélicoïdal **14.** La spire supérieure du ressort hélicoïdal **14** peut être en appui direct ou indirect sur la portée d'appui **32** du support inférieur **18.** La portée d'appui **32** annulaire est tangente à un plan d'appui **P1.** Le plan d'appui **P1** est perpendiculaire à l'axe de référence **100.**

Le support inférieur **18** comprend aussi une jupe annulaire **34.** La jupe annulaire **34** est en saillie axiale depuis la portée d'appui **32** annulaire dans la direction axiale descendante **S1.** La jupe annulaire **34** est également saillante radialement vers l'axe de référence **100** depuis la portée d'appui **32** annulaire. La jupe annulaire **34** permet le bon positionnement axial du ressort hélicoïdal **14** dans la jambe de suspension **10.** La jupe annulaire **34** permet donc un centrage du ressort hélicoïdal **14** autour de l'axe de référence **100.**

La jupe annulaire **34** présente un bord inférieur **36.** Le bord inférieur **36** de la jupe annulaire **34** est situé axialement à l'opposé de la portée d'appui **32** annulaire. Le bord inférieur **36** présente un crénelage axial. Le bord inférieur **36** étant annulaire, le crénelage axial présente une composante axiale et une composante circonférentielle depuis l'axe de référence **100.**

Le bord inférieur **36,** crénelé, présente alors une alternance d'un nombre N1 de dents **38** et d'un nombre N2 de vides **40,** avec N1=N2, et plus particulièrement dans ce mode de réalisation, N1=N2=7. Plus généralement, le bord inférieur **36** présente un nombre N1 de dents **38** supérieur ou égal à 3, de préférence supérieur ou égal à 5, et inférieur ou égal à 15, de préférence inférieur ou égal à 12.

Chaque dent **38** est en saillie axiale. Chaque vide **40** sépare les dents **38** deux à deux. La jupe annulaire **34** présente alors une hauteur, mesurée entre le bord inférieur **36** et le plan d'appui **P1,** variable en fonction du secteur angulaire. Le bord inférieur **36** est tangent à un plan supérieur **P2,** perpendiculaire à l'axe de référence **100,** dans un secteur angulaire présentant un vide **40.** Le bord inférieur **36** est tangent à un plan inférieur **P3,** perpendiculaire à l'axe de référence **100,** dans un secteur angulaire présentant une dent **38.** Le bord inférieur **36** est compris entre le plan inférieur **P3** et le plan supérieur **P2.**

Le bord inférieur **36** est crénelé de sorte à alléger le support inférieur **18.** Le crénelage axial du rebord inférieur **36** doit donc être conséquent, tant selon la composante axiale que la composante circonférentielle.

Pour ce faire, le plan inférieur **P3** est situé à une distance **D1** du plan supérieur **P2** et à une distance **D2** du plan d'appui **P1,** telles que $\frac{D1}{D2}=0,56$ dans ce mode de réalisation, avec D1=14mm et D2=25mm. Plus généralement, $\frac{D1}{D2} > 0,3$, et de préférence $\frac{D1}{D2} > 0,5$. En d'autres termes, le crénelage est réalisé axialement sur au moins $\frac{3}{10}$ d'une hauteur de la jupe annulaire **34** mesurée entre le plan d'appui **P1** et le bord inférieur **36** dans un secteur angulaire présentant une dent **38.**

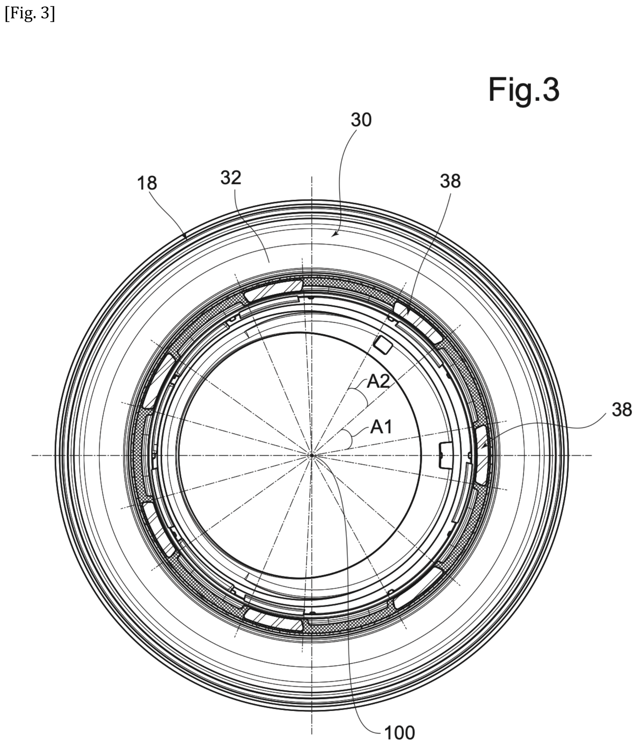

Aussi, en référence à la figure 3, dans un plan de coupe **P4** perpendiculaire à l'axe de référence **100** et situé à mi-distance du plan inférieur **P3** et du plan supérieur **P2,** deux dents **38** successives sont séparées par un vide **40** de secteur angulaire **A1** supérieur ou égal à 15°, de préférence supérieur ou égal à 25°, mesuré autour de l'axe de référence **100.** De plus, toujours dans ce même plan de coupe **P4,** deux vides **40** successifs sont séparés par une dent **38** d'un secteur angulaire **A2** strictement inférieur au secteur angulaire du vide **40,** autour de l'axe de référence **100.** En d'autres termes, l'ensemble des vides **40** occupent un secteur angulaire supérieur à celui de l'ensemble des dents **38.**

La jupe annulaire **34** présente aussi une face annulaire extérieure **42.** La face annulaire extérieure **42** forme localement un pourtour intérieur du support inférieur **18.** La face annulaire extérieure **42** est tournée dans une direction opposée à l'axe de référence **100.** La face annulaire extérieure **42** est tronconique. La face annulaire extérieure **42** présente, au niveau du plan d'appui **P1,** une section de diamètre supérieur à celui d'une section au niveau du plan supérieur **P2.**

D'autre part, la jupe annulaire **34** présente une face annulaire intérieure **44.** La face annulaire intérieure **44** forme localement un pourtour intérieur du support inférieur **18.** La face annulaire intérieure **44** présente un angle de dépouille, ici de 0,5°.

La face annulaire intérieure **44** et la face annulaire extérieure **42** sont donc séparées par une distance **D3** variable axialement. Dans le plan de coupe **P4,** la distance **D3** est de 2,8 mm. Les dents **38** présentent donc une épaisseur non négligeable de sorte à maintenir une robustesse nécessaire au centrage du ressort hélicoïdal **14,** et pour supporter des efforts que ledit ressort pourra éventuellement générer. De manière générale, **D1** est supérieure ou égale à 200% de la distance **D3,** de préférence supérieure ou égale à 300% de la distance **D3.**

Le support inférieur **18,** comprenant de telles surfaces intérieure **44** et extérieure **42,** ne présente pas de contre dépouille dans la direction axiale ni dans la direction radiale, et peut donc être fabriqué avec des outils de moulage de conception simple et moins coûteuse.

Grâce à l'ensemble des caractéristiques susmentionnées, les dents **38** permettent de prolonger axialement la jupe annulaire **34** de sorte à assurer le centrage du ressort hélicoïdal **14** autour de l'axe de référence **100** tandis que les vides **40** réduisent le volume de matière formant le support inférieur **18** de sorte à alléger ledit support inférieur **18.**

Plus particulièrement, on peut comparer le volume de matière et un volume théorique correspondant à la somme d'un volume d'une partie supérieure du support inférieur **18** et d'un volume d'une enveloppe d'une partie inférieure.

Le volume de la partie supérieure du support inférieur **18** est le volume du support inférieur **18** au-dessus du plan supérieur **P2.** Ce volume n'est pas impacté par l'invention.

L'enveloppe est quant à elle délimitée radialement par la face annulaire extérieure **42** de la jupe annulaire **34** et la face annulaire intérieure **44** de la jupe annulaire **34.** L'enveloppe est également délimitée axialement par le plan inférieur **P3** et le plan supérieur **P2.**

Le support inférieur **18** présente un volume de matière inférieur à au moins 96% du volume théorique, de préférence inférieur à 92% du volume théorique.

Cette baisse du volume de matière formant le support inférieur **18** se traduit, en plus d'un allégement du support inférieur **18,** par des diminutions de coûts lors de la production, liés notamment au gain de matière.

Comme évoqué plus haut, la butée tournante de suspension **12** peut comprendre un anneau de filtration **26.** La butée tournante de suspension **12** peut également comprendre une manche de protection **28.** Dans le premier mode de réalisation, la butée tournante de suspension **12** comprend ces deux éléments **26, 28.**

L'anneau de filtration **26** est réalisé dans un matériau permettant l'absorption de bruits et de vibrations dans le domaine de fréquences audibles, de sorte à limiter leur propagation à travers la jambe de suspension **10.** L'anneau de filtration **26** est également configuré pour répartir les contraintes de compression du ressort hélicoïdal **14** sur le support inférieur **18** en évitant les contacts localisés. L'anneau de filtration **26** recouvre, de préférence par surmoulage, une partie de la portée d'appui **32** annulaire et toute la jupe annulaire **34,** à savoir la face annulaire intérieure **44** et la face annulaire extérieure **42.** L'anneau de filtration **26** présente angulairement une hauteur constante, s'étendant depuis le plan d'appui **P1** jusqu'au plan inférieur **P3,** de sorte à recouvrir le bord inférieur **36.** L'anneau de filtration **26** permet également d'obstruer radialement les vides **40** de la jupe annulaire **34.** Suivant une variante de réalisation, tout ou partie du pourtour d'une dent **38** peut rester non recouverte, par exemple au niveau de la face annulaire intérieure **44,** pour permettre une indexation angulaire.

L'anneau de filtration **26** présente, entre le plan supérieur **P2** et le plan inférieur **P3,** une épaisseur mesurée radialement variable. L'épaisseur, entre les plans supérieur **P2** et inférieurs **P3** est fonction du secteur angulaire. Plus particulièrement, l'anneau de filtration **26** présente une épaisseur plus grande au regard des vides **40** de la jupe qu'au regard des dents **38.** De cette manière, l'anneau de filtration **26** présente une rigidité prédéterminée nécessaire au maintien de sa forme annulaire.

Au voisinage du plan inférieur **P3,** l'anneau de filtration **26** présente une interface de liaison **46.** L'interface de liaison **46** est configurée pour lier la manche de protection **28** à la butée tournante de suspension **12.** L'interface de liaison **46** comprend ici un crochet **48.** Le crochet **48** est annulaire. Le crochet **48** est tourné radialement vers l'extérieur de la jupe annulaire **34.** Le crochet **48** est saillant radialement vers l'extérieur de la jupe annulaire **34.**

La manche de protection **28** comprend une portion longue **50,** s'étendant axialement le long de l'amortisseur télescopique **16.** Plus particulièrement, la portion longue **50** de la manche de protection **28** s'étend axialement dans la direction axiale descendante S1 depuis le plan inférieur **P3** jusqu'à un corps de l'amortisseur **16** dans lequel se déplace un piston. De cette manière, la portion longue **50** de la manche de protection **28** protège la liaison glissière entre le piston et le corps de l'amortisseur **16**

La manche de protection **28** comprend également une extension de liaison **52.** L'extension de liaison **52** est annulaire. L'extension de liaison **52** s'étend dans une direction axiale ascendante, opposée à la direction axiale descendante, depuis le plan inférieur **P3.** L'extension de liaison **52** comprend une interface de liaison complémentaire **54.** L'interface de liaison complémentaire **54** est configurée pour correspondre par complémentarité de forme à l'interface de liaison **46** présentée par l'anneau de filtration **26.** En d'autres termes, l'extension de liaison **52** comprend, au niveau de son interface de liaison complémentaire **54,** un crochet complémentaire **56** correspondant et configuré pour se lier au crochet **48** de l'interface de liaison **46** de l'anneau de filtration **26.**

L'extension de liaison **52** de la manche de protection **28** comprend également un prolongement axial

58 s'étendant dans la direction axiale ascendante depuis l'interface de liaison complémentaire **54.** Le prolongement axial **58** est de préférence ajusté de manière annulaire autour de l'anneau de filtration **26.** De cette manière, la liaison entre la manche de protection **28** et l'anneau de filtration **26** est améliorée, et la protection par étanchéification est accrue.

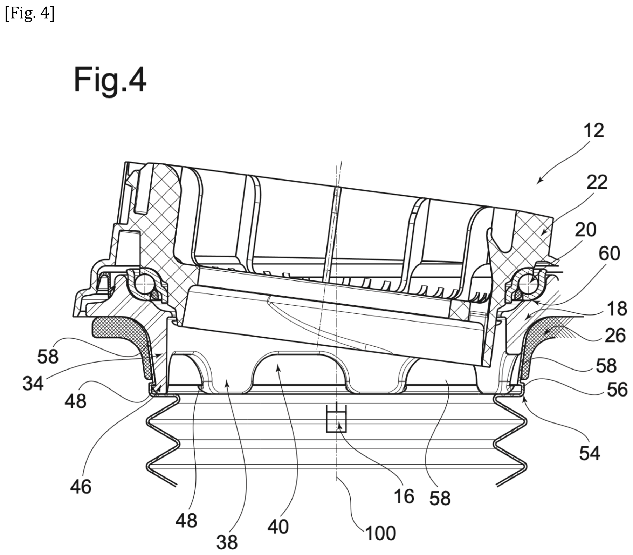

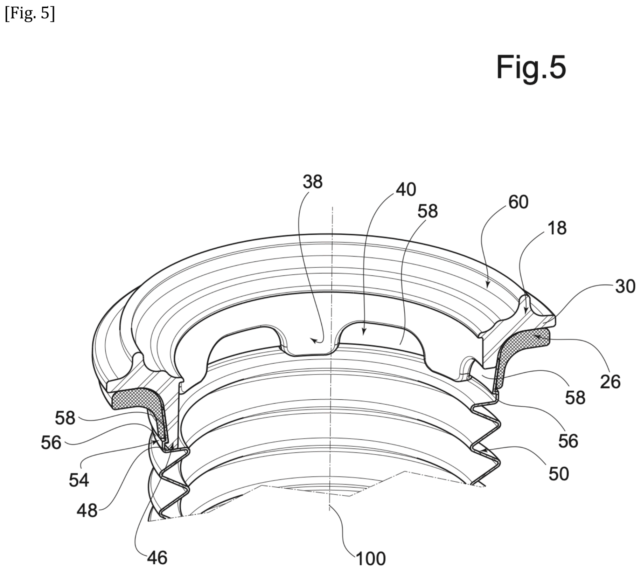

Sur les figures 4 et 5 est illustré un deuxième mode de réalisation. Le deuxième mode de réalisation diffère du premier en ce que l'anneau de filtration **26** recouvre uniquement une portion annulaire de la face annulaire extérieure **42** de la jupe annulaire **34.** Dans ce mode de réalisation, la liaison entre la manche de protection **28** et la butée tournante de suspension **12** est assurée par le support inférieur **18.** Le support inférieur **18** présente alors, au voisinage du plan inférieur **P3,** c'est-à-dire à une extrémité distale des dents **38** de la jupe annulaire **34,** l'interface de liaison **46.** L'interface de liaison **46** présente alors un crochet **48** annulaire discontinu. Le prolongement axial **58** de l'extension de liaison **52** de la manche de protection **28** permet d'obstruer les vides **40** de la jupe annulaire **34.** Le prolongement axial **58** est alors ajusté à la portion de jupe annulaire **34,** qu'il recouvre. L'anneau de filtration **26** est alors rapporté sur tout ou partie de la portée d'appui **32** annulaire et sur une partie du prolongement axial **58.** Le prolongement axial **58** est ainsi pincé entre la jupe annulaire **34** et l'anneau de filtration **26,** garantissant une étanchéité optimale et un maintien sécurisé.

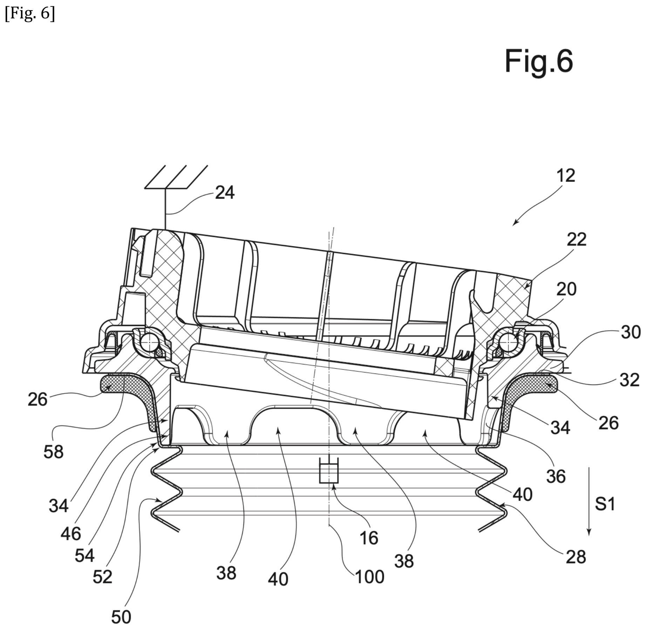

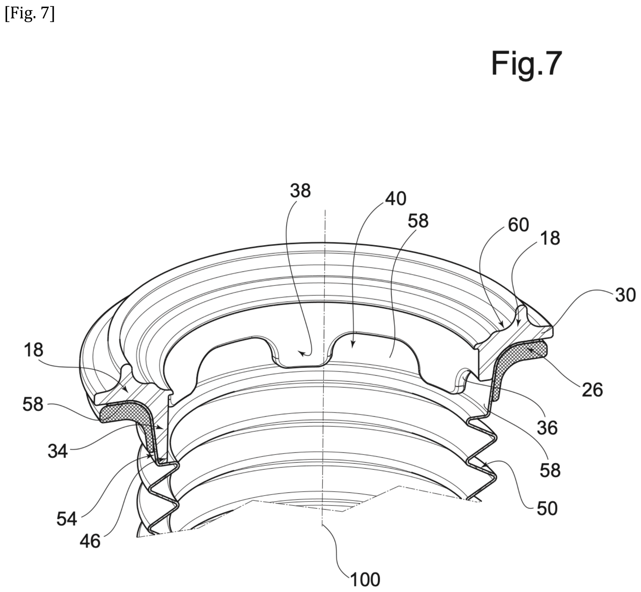

Sur les figures 6 et 7 est illustré un troisième mode de réalisation. Le troisième mode de réalisation diffère du deuxième mode de réalisation en ce que l'interface de liaison **46** et l'interface de liaison complémentaire **54** ne présentent pas de crochets **48.** Le prolongement axial **58** de l'extension de liaison **52** s'étend alors jusqu'à la portée d'appui **32** du support inférieur **18,** et recouvre une portion de la portée d'appui **32.** L'anneau de filtration **26** est rapporté sur le prolongement axial **58** de sorte à lier la manche de protection **28** à la butée tournante de suspension **12** par serrage ou par compression.

Le support inférieur **18** en alliage métallique léger est configuré pour reprendre des efforts importants et pour limiter les déformation sous charge, avec une masse relativement faible.

Naturellement, les exemples représentés sur les figures et discutés ci-dessus ne sont donnés qu'à titre illustratif et non limitatif. Il est explicitement prévu que l'on puisse combiner entre eux les différents modes de réalisation illustrés pour en proposer d'autres.

**Revendications**

**1.** Support inférieur (18) annulaire pour une butée tournante de suspension (12) d'une jambe de suspension, le support inférieur (18) présentant un volume de matière et formant une portée d'appui (32) annulaire centrée sur un axe de référence (100) et tournée axialement dans une direction axiale descendante pour venir en appui direct ou indirect, dans un plan d'appui (P1) perpendiculaire à l'axe de référence (100), contre une spire supérieure d'un ressort hélicoïdal (14) de la jambe de suspension (10), et une jupe annulaire (34) en saillie axiale depuis la portée d'appui (32) annulaire dans la direction axiale descendante, la jupe annulaire (34) comprenant un bord inférieur (36) **caractérisé en ce que** le bord inférieur (36) présente un crénelage axial formant une alternance annulaire de dents (38) en saillie axiale et de vides (40) séparant les dents (38) deux à deux, le bord inférieur (36) ayant au moins un point d'intersection avec un plan supérieur (P2) perpendiculaire à l'axe de référence (100) et au moins un point d'intersection avec un plan inférieur (P3) perpendiculaire à l'axe de référence (100), tels que le bord inférieur (36) est entièrement situé entre le plan inférieur (P3) et le plan supérieur (P2), une portion inférieure du support inférieur (18), située entre le plan supérieur (P2) et le plan inférieur (P3), étant située entièrement à l'intérieur d'une enveloppe ayant une symétrie de révolution autour de l'axe de référence (100), et le volume de matière du support inférieur (18) étant inférieur à 96%, de préférence 92%, d'un volume obtenu en additionnant le volume d'une portion supérieure du support inférieur (18) située au-dessus du plan supérieur (P2), et le volume de l'enveloppe.

**2.** Support inférieur (18) selon la revendication 1, **caractérisé en ce que** le plan inférieur (P3) est situé à une distance D1 du plan supérieur (P2) et à une distance D2 du plan d'appui (P1), telles que $\frac{D1}{D2} > 0,3$, et de préférence $\frac{D1}{D2} > 0,5$. *D2 D2*

**3.** Support inférieur (18) selon la revendication 1 ou 2, **caractérisé en ce que** dans un plan de coupe (P4) perpendiculaire à l'axe de référence (100) et situé à mi-distance du plan inférieur (P3) et du plan supérieur (P2),

- deux dents (38) successives sont séparées par un vide (40) de secteur angulaire (A1) supérieur ou égal à 15°, de préférence supérieur ou égal à 25°, mesuré autour de l'axe de référence (100) ; et/ou
- deux vides (40) successifs sont séparés par une dent (38) d'un secteur angulaire (A2) strictement inférieur au secteur angulaire du vide (40), autour de l'axe de référence (100) ; et/ou
- la distance D1 est supérieure ou égale à 200% d'une distance D3 séparant deux faces radiales opposées de la jupe annulaire (34), de préférence supérieure ou égale à 300% de la distance D3.

**4.** Support inférieur (18) selon l'une quelconque des revendications 1 à 3, **caractérisé en ce qu'**il comprend un nombre N1 de dents (38) supérieur ou égal à 3, de préférence équirépartie autour de l'axe de référence (100), de préférence supérieur ou égal à 5, et inférieur ou égal à 15, de préférence inférieur ou égal à 12.

**5.** Support inférieur (18) selon l'une quelconque des revendications 1 à 4, **caractérisé en ce que** certaines au moins des dents (38) présentent une interface de liaison (46) avec une manche de protection (28) d'un amortisseur télescopique (16) de la jambe de suspension (10) ou avec un anneau de filtration (26) annulaire destiné à être interposé entre la portée d'appui (32) et la spire supérieure du ressort hélicoïdal (14) de la jambe de suspension (10), par exemple :

- un ou plusieurs crochets (48) annulaires en saillie radialement à l'opposé de l'axe de référence (100) ; et/ou
- un ou plusieurs crochets (48) annulaires en saillie radialement vers l'axe de référence (100) ; et/ou
- un ou plusieurs crochets (48) en saillie orthoradiale vers une dent (38) voisine parmi les dents (38).

**6.** Support inférieur (18) selon l'une quelconque des revendications précédentes, **caractérisé en ce qu'**il est constitué d'un métal ou alliage métallique monobloc, de préférence un métal léger ou un alliage de métaux légers, de préférence encore constitué d'un alliage d'aluminium ou de zinc.

**7.** Support inférieur (18) selon l'une quelconque des revendications précédentes, **caractérisé en ce qu'**un pourtour intérieur du support inférieur (18), incluant le bord inférieur (36), est réalisé sans contredépouille en direction axiale.

**8.** Support inférieur (18) selon l'une quelconque des revendications précédentes, **caractérisé en ce qu'**un pourtour extérieur du support inférieur (18), complémentaire du pourtour intérieur, est réalisé sans contredépouille en direction axiale ou dans une direction radiale de démoulage.

**9.** Butée tournante de suspension (12) d'une jambe de suspension (10), la butée tournante de suspension (12) étant **caractérisée en ce qu'**elle comprend au moins :

- un support inférieur (18) selon l'une quelconque des revendications précédentes,
- un couvercle de butée (22) permettant de lier la butée tournante de suspension (12) à une superstructure (24) de véhicule,
- un palier (20) lisse ou à roulement positionné entre le support inférieur (18) et le couvercle de butée (22), guidant un mouvement relatif de rotation entre le couvercle de butée (22) et le support inférieur (18) autour de l'axe de référence (100) du support inférieur (18),
- de façon optionnelle, un anneau de filtration (26) élastomère en appui direct ou indirect contre la portée d'appui (32) et configuré pour filtrer des bruits ou vibrations entre un ressort hélicoïdal (14) et le support inférieur (18),
- de façon optionnelle, une manche de protection (28) déformable continument annulaire s'étendant axialement dans une direction descendante (S1) depuis la jupe annulaire (34), la manche de protection (28) étant configurée pour protéger un volume central que la manche de protection (28) délimite, le volume central étant destiné à accueillir une partie au moins d'un amortisseur télescopique (16).

**10.** Butée tournante de suspension (12) selon la revendication 9, **caractérisée en ce que** l'anneau de filtration (26) est surmoulé sur une partie au moins de la portée d'appui (32) annulaire et une partie au moins de la jupe annulaire (34) du support inférieur (18).

**11.** Butée tournante de suspension (12) selon la revendication 9 ou 10, **caractérisée en ce que** l'anneau de filtration (26) recouvre une partie au moins de chaque dent (38) de la jupe annulaire (34), de préférence recouvre intégralement une face annulaire extérieure (42) de la jupe annulaire (34), la face annulaire extérieure (42) étant tournée à l'opposé de l'axe de référence (100).

**12.** Butée tournante de suspension (12) selon l'une des revendications 9 à 11, **caractérisée en ce que** l'anneau de filtration (26) obstrue radialement les vides (40) de la jupe annulaire (34).

**13.** Butée tournante de suspension (12) selon l'une des revendications 9 à 12, **caractérisée en ce que** l'anneau de filtration (26) présente une interface de liaison (46), par exemple un crochet (48) annulaire continu ou discontinu, l'interface de liaison (46) étant configurée pour lier directement ou indirectement la manche de protection (28) au support inférieur (18).

**14.** Butée tournante de suspension (12) selon l'une des revendications 9 à 13, **caractérisée en ce que** la manche de protection (28) présente, à une extrémité supérieure de la manche de protection (28), une extension de liaison (52) s'étendant axialement dans une direction axiale ascendante opposée à la direction axiale descendante (S1).

**15.** Butée tournante de suspension (12) selon la revendication 14, en combinaison avec la revendication 5 ou 13, **caractérisée en ce que** l'extension de liaison (52) présente une interface de liaison complémentaire (54) destinée à se lier par complémentarité de forme à l'interface de liaison (46).

**16.** Butée tournante de suspension (12) selon la revendication 14 ou 15, **caractérisée en ce que**

> - l'extension de liaison (52) recouvre tout ou partie d'une face annulaire extérieure (42) de la jupe annulaire (34) ; et/ou
> - l'extension de liaison (52) recouvre tout ou partie de la portée d'appui (32) annulaire ; et/ou
> - l'extension de liaison (52) est intercalée entre une partie au moins du support inférieur et une partie au moins de l'anneau de filtration (26), de préférence est pincée entre une partie au moins du support inférieur (18) et une partie au moins de l'extension de liaison (52).

**17.** Jambe de suspension (10) **caractérisée en ce qu'**elle comprend au moins une butée tournante de suspension (12) selon l'une quelconque des revendication 9 à 16, un ressort hélicoïdal (14) dont une spire supérieure est en appui direct ou indirect, dans un plan d'appui (P1) perpendiculaire à l'axe de référence (100) du support inférieur (18), avec la portée d'appui (32) annulaire, et, le cas échéant, un amortisseur télescopique (16) logé dans le volume central de la manche de protection (28).

[Fig. 1]

Fig.1

[Fig. 2]

# Fig.2

[Fig. 3]

Fig.3

[Fig. 4]

# Fig.4

[Fig. 5]

Fig.5

[Fig. 6]

Fig.6

[Fig. 7]

Fig.7

# EP 4 759 573 A1

**RAPPORT DE RECHERCHE EUROPEENNE**

Europäisches Patentamt
European Patent Office
Office européen des brevets

**Numéro de la demande**

**EP 25 21 1530**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 2 975 947 B1 (NTN SNR ROULEMENTS [FR]) 2 janvier 2015 (2015-01-02) * le document en entier * ----- | 1-17 | INV. B60G15/06 |
| A | FR 3 099 415 A1 (NTN SNR ROULEMENTS [FR]) 5 février 2021 (2021-02-05) * le document en entier * ----- | 1-17 | |

**DOMAINES TECHNIQUES RECHERCHES (IPC)**

B60G

Le présent rapport a été établi pour toutes les revendications

| Lieu de la recherche | Date d'achèvement de la recherche | Examinateur |
|---|---|---|
| La Haye | 25 mars 2026 | Savelon, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................................
& : membre de la même famille, document correspondant

EPO FORM 1503 03.82 (P04C02)

17

## ANNEXE AU RAPPORT DE RECHERCHE EUROPEENNE
## RELATIF A LA DEMANDE DE BREVET EUROPEEN NO.

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-03-2026

| Document brevet cité au rapport de recherche | | Date de publication | Membre(s) de la famille de brevet(s) | | Date de publication |
|---|---|---|---|---|---|
| FR 2975947 | B1 | 02-01-2015 | CN | 102806815 A | 05-12-2012 |
| | | | EP | 2529960 A1 | 05-12-2012 |
| | | | FR | 2975947 A1 | 07-12-2012 |
| | | | RU | 2012122193 A | 10-12-2013 |
| FR 3099415 | A1 | 05-02-2021 | FR | 3099415 A1 | 05-02-2021 |
| | | | WO | 2021018837 A1 | 04-02-2021 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2975947 B1

- FR 3099415 A1